# EUROPEAN PATENT SPECIFICATION

(11) **EP 1 756 217 B1**
(45) Date of publication and mention of the grant of the patent: **21.03.2012**
(21) Application number: 04773953.7
(22) Date of filing: 18.06.2004
(51) Int. Cl.: C08L 51/04, C08K 5/521

(54) **FLAMEPROOF THERMOPLASTIC RESIN COMPOSITION**
FLAMMGESCHÜTZTE THERMOPLASTISCHE HARZZUSAMMENSETZUNG
COMPOSITION DE RESINE THERMOPLASTIQUE IGNIFUGE

(43) Date of publication of application: 28.02.2007
(73) Proprietor: CHEIL INDUSTRIES INC., Gumi-si, Gyeongsangbuk-do 730-710 (KR)
(72) Inventor: HONG, Sang Hyun, Gyeonggi-do 435-753 (KR); AHN, Sung Hee, Seongdong-gu Seoul 133-020 (KR); YANG, Jae Ho, Gyeonggi-do 435-040 (KR); BAE, Su Hak, Seongdong-gu Seoul 133-112 (KR); RYU, Young S., Anyang-si Gyeonggi-do 431-080 (KR)
(74) Representative: Bublak, Wolfgang
(86) International application number: PCT/KR2004/001456
(87) International publication number: WO 2005/123833

(56) References cited:
- WO-A1-02/100946
- WO-A1-03/089513
- WO-A1-2004/029143
- WO-A1-2005/012418
- GB-A- 2 336 158
- KR-A- 98 051 327
- KR-A- 2001 083 602
- KR-A- 2004 003 563
- KR-A- 2004 005 992
- US-A- 4 273 881
- US-A- 4 503 178
- US-A1- 2003 130 385

## Description

### Field of the Invention

The present invention relates to a styrenic resin composition having good flame retardancy and environment-friendly effect. More particularly, the present invention relates to a styrenic thermoplastic resin composition with good flame retardancy as well as an environment-friendly effect by employing a ring-shaped alkyl phosphonate ester compound as a flame retardant to a rubber modified polystyrene resin.

### Background of the Invention

A rubber modified styrenic resin has a good processability, a high mechanical properties, especially impact strength, and a good appearance. Therefore, the resin has been widely applied to electric or electronic goods and office supplies. However, the disadvantage could be observed when the rubber modified styrenic resin is applied to heat-emitting products, such as computers, facsimiles, because the styrenic resin is extremely easy to catch a fire. Therefore, the methods for improving the flame-retardant property of the rubber-modified styrenic resin have been developed.

A widely known method for flame retardancy is that a halogen-containing compound is added to a rubber modified styrenic resin to give a good flame-retardant property. The examples of the halogen-containing compounds used in the method above are, for example, polybromodiphenyl ether, tetrabromobisphenol-A, epoxy compounds substituted by bromine. An antimony-containing compound may added together to further increase the flame retardancy.

However, the methods for improving the flame-retardant property by applying a halogen- and antimony-containing compound have disadvantages that the halogen-containing compound cause the corrosion of the mold itself by the hydrogen halide gases released during the molding process and is fatally harmful due to the toxic gases liberated in case of fire. Especially, a polybromodiphenyl ether, mainly used for a halogen-containing flame retardant, tends to generate toxic gases such as dioxin or furan during combustion. So, a major concern in this field is to develop a flame retardant resin which is prepared without a halogen-containing compound.

It is a commonly known method to apply an aromatic phosphate ester compound as a halogen-free flame retardant to a styrenic resin. However, usage of only an aromatic phosphate ester does not impart sufficient flame retardancy of UL 94 V1. In order to solve the above problem, methods using aromatic phosphate ester to a blend of styrenic resin and polyphenylene ether resin or a blend of styrenic resin and a polycarbonate resin have been proposed.

U.S. patent No. 3,639,506 discloses resin composition using mono aromatic phosphate ester such as triphenylphosphate to a blend of high impact polystyrene (HIPS) resin and polyphenylene ether resin.

U.S. Patent No. 5,061,745 discloses a thermoplastic resin composition using a mono phosphate ester to a blend of an ABS graft copolymer and a polycarbonate resin. In addition, U.S. Patent No. 5,204,394 discloses a resin composition using an oligomeric phosphate ester as a flame retardant to a blend of an ABS resin and a polycarbonate resin.

Patent document WO 2004/029143 A1 discloses a flame retardant rubber-modified styrenic resin composition employing a ring-shaped alkyl phosphonic acid ester compound as flame retardant. The resin composition may further contain polyphenylene ether optionally.

Patent document US 2003/0130385 A1 discloses a thermoplastic resin composition comprising a blend of a rubber modified styrene-containing resin and a polyphenylene ether resin, an oxaphospholane compound and, optionally, a phosphoric acid compound.

Accordingly, the present inventors have developed a flameproof styrenic thermoplastic resin composition without using a polyphenylene ether resin or a polycarbonate resin.

### Objects of the Invention

An object of the present invention is to provide a thermoplastic resin composition having stability for the fire.

Another object of the present invention is to provide an environment friendly thermoplastic resin composition which does not contain a halogen-containing compound which causes the environmental pollution during preparation or combustion of the resin.

A further object of the present invention is to provide a thermoplastic resin composition with good flame retardancy without using a polyphenylene resin or a polycarbonate resin.

Other objects and advantages of this invention will be apparent from the ensuing disclosure and appended claims.

### Summary of the Invention

A thermoplastic resin composition comprising: (A) 100 parts by weight of a rubber modified polystyrene resin containing (a₁) 20 to 100 % by weight of graft copolymer prepared by graft polymerizing 5 to 65 % by weight of a rubber polymer, 30 to 95 % by weight of an aromatic vinyl monomer, 0 to 20 % by weight of a monomer copolymerizable with said aromatic vinyl monomer and 0 to 15 % by weight of a monomer selected from the group consisting of acrylic acid, methacrylic acid, maleic anhydride and N-substituted maleimide ; and (a₂) 0 to 80 % by weight of copolymer prepared by polymerizing 60 to 90 % by weight of an aromatic vinyl monomer, 10 to 40 % by weight of a monomer copolymerizable with said aromatic vinyl monomer and 0 to 30 % by weight of a monomer selected from the group consisting of acrylic acid, methacrylic acid, maleic anhydride and N-substituted maleimide ; and (B) 20 to 40 parts by weight of a ring-shaped alkyl phosphonate ester compound; wherein the rubber modified polystyrene resin does not comprise a polyphenylene ether resin.

### Detailed Description of the Invention

### (A) Rubber Modified Polystyrene Resin

The rubber modified polystyrene resin according to the present invention is a polymer wherein rubber phase polymers are dispersed in the form of particles in a matrix obtained by polymerizing an aromatic vinyl monomer and a vinyl group-containing monomer. The rubber modified polystyrene resin can be prepared by polymerizing aromatic vinyl monomer and optionally a monomer copolymerizable with said aromatic vinyl monomer with a rubber phase polymer.

Such rubber modified polystyrene resin is prepared by a known method such as emulsion polymerization, suspension polymerization or bulk polymerization, and is conventionally produced by an extrusion with a styrene-containing graft copolymer resin and a styrene-containing copolymer resin. In a bulk polymerization, both a styrene-containing graft copolymer resin and a styrene-containing copolymer resin are prepared together in one process. In other polymerizations, a styrene-containing graft copolymer resin and a styrene-containing copolymer resin may be prepared separately. In either case, the contents of rubber in a final rubber modified polystyrene resin to the total weight of the base resin are preferably in 5 to 30 % by weight.

In the rubber modified polystyrene resin of the present invention, a graft copolymer resin can be used alone or in combination with a copolymer resin in consideration of compatibility thereof.

### (a₁) Graft Copolymer

Examples of a rubber polymer for preparing the graft copolymer are diene rubbers such as polybutadiene, poly(styrene-butadiene), poly(acrylonitrile-butadiene) ; saturated rubbers in which hydrogen is added to said diene-containing rubber; isoprene rubber; acryl rubbers such as polybutyl acrylic acid; and terpolymer of ethylene-propylene-diene (EPDM). It is preferable to use a diene-containing rubber, more preferably a butadiene-containing rubber. The content of rubber in the graft copolymer is preferably in the range of 5 to 65 % by weight based on the total weight of the graft copolymer.

Examples of an aromatic vinyl monomer for preparing the graft copolymer are styrene, α-methyl styrene, p-methyl styrene. In the above examples, styrene is the most preferable.

In the graft copolymer of the present invention, at least one monomer copolymerizable with said aromatic vinyl monomer may be introduced. It is preferred that the copolymerizable monomer is a cyanide vinyl-containing compound such as acrylonitrile or an unsaturated nitrile-containing compound such as methacrylonitrile.

The graft copolymer of the present invention is prepared by graft copolymerizing 5~65 % by weight of the rubber, 30~95 % by weight of the aromatic vinyl monomer and 0~20 % by weight of the copolymerizable monomer.

In addition, in order to give good characteristics of processability and heat resistance, the monomers such as acrylic acid, methacrylic acid, maleic anhydride and N-substituted maleimide can be added in the graft polymerization. The amounts of the monomers are in the range of 0 to 15% by weight based on the total weight of the graft copolymer.

To acquire good impact strength and surface appearance when said styrene-containing graft copolymer is prepared, the average size of rubber particles is preferably in the range of from 0.1 to 4 µm.

### (a₂) Copolymer

The copolymer of the present invention is prepared by copolymerizing an aromatic vinyl monomer and a copolymerizable monomer, depending on the ratio and compatibility between monomers except rubber in the graft copolymer.

Examples of the aromatic vinyl monomer are styrene, α-methylstyrene, p-methylstyrene. Styrene is the most preferable. The aromatic vinyl monomer in the total copolymer is contained in the amount of 60 to 90 % by weight.

In the copolymer of the present invention, at least one monomer copolymerizable with said aromatic vinyl monomer may be introduced. Examples of the copolymerizable monomer are cyanide vinyl -containing compounds such as acrylonitrile and unsaturated nitrile-containing compounds such as methacrylonitrile. It is preferable that 10 to 40 % by weight of the copolymerizable monomer to the total copolymer is employed.

In addition, 0 to 30 % by weight of other monomers such as acrylic acid, methacrylic acid, maleic anhydride and N-substituted maleimide may be added and copolymerized thereto in order to give good characteristics of processability and heat resistance.

Examples of the rubber modified polystyrene resin are acrylonitrile-butadiene-styrene (ABS) copolymer resin, acrylonitrile-ethylenepropylene rubber-styrene (AES) copolymer resin, acrylonitrile-acryl rubber-styrene (AAS) copolymer resin, high impact polystyrene resin (HIPS).

In this invention, the rubber modified polystyrene resin (A) comprises 20~100 % by weight of the graft copolymer (a₁) and 0~80 % by weight of the copolymer (a₂).

### (B) Ring-Shaped Alkyl Phosphonate Ester Compound

The ring-shaped alkyl phosphonate ester compound of the present invention is represented by the following chemical formula (I): 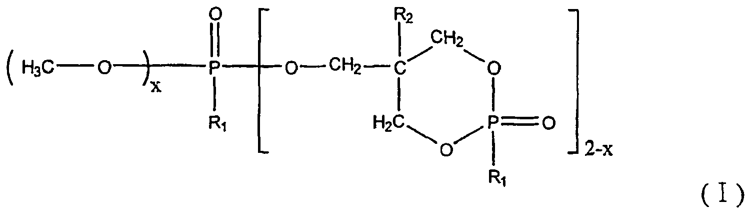 wherein R₁ and R₂ are independently of each other C₁-C₄ alkyl and x is 0 or 1.

Examples of the ring-shaped alkyl phosphonate ester compound having the structural formula (I) include methyl-bis(5-ethyl-2-methyl-1,3,2-dioxaphosphorinan-5yl) methyl methyl phosphonate ester P-oxide, methyl-bis(5-ethyl-2-methyl- 1,3,2- dioxaphosphorinan-5yl) phosphonate ester P, P'-dioxide.

The ring-shaped alkyl phosphonate ester compound (B) of present invention can be used in single or in combination.

In the present invention, the ring-shaped alkyl phosphonate ester compound(B) is used in an amount of from 15 to 40 parts by weight, preferably 20 to 35 parts by weight per 100 parts by weight of the rubber modified polystyrene resin(A). If the amount of the ring-shaped alkyl phosphonate ester compound is added less than 15 parts by weight, the resin composition has poor flame retardancy. On the other hand, if the amount of the ring-shaped alkyl phosphonate ester compound is more than 40 parts by weight, the compatibility between base resin and the ring-shaped alkyl phosphonate ester compound is deteriorated.

Other additives may be used in the thermoplastic resin composition of the present invention. The additives include an anti-dripping agent, a heat stabilizer, an oxidation inhibitor, a compatibilizer, a light stabilizer, an organic or inorganic pigment and/or dye, an inorganic filler and so forth. The additives are employed in an amount of 0~30 parts by weight as per 100 parts by weight of the base resin.

The invention may be better understood by reference to the following examples which are intended for the purpose of illustration and are not to be construed as in any way limiting the scope of the present invention, which is defined in the claims appended hereto.

### Examples

The components to prepare the thermoplastic resin compositions in Examples 1~3 and Comparative Examples 1~3 are as follows:

### (A) Rubber Modified Polystyrene Resin

### (a₁) Graft Copolymer Resin

### (a₁₁) Styrene-Acrylonitrile Containing Graft Copolymer Resin

50 parts of butadiene rubber latex powder, 36 parts of styrene, 14 parts of acrylonitrile, and 150 parts of deionized water were mixed. To the mixture, 1.0 part of potassium oleate, 0.4 parts of cumenhydroperoxide, 0.2 parts of mercaptan-containing chain transfer agent, 0.4 parts of glucose, 0.01 parts of ferrous sulfate hydrate, and 0.3 parts of sodium pyrophosphate were added. The blend was kept at 75 °C for 5 hours to obtain g-ABS latex. To the g-ABS latex, 0.4 parts of sulfuric acid was added, coagulated and dried to obtain rubber modified polystyrene resin (g-ABS) in a powder form.

### (a₁₂) High Impact Polystyrene (HIPS)

High Impact Polystyrene (product name : HR-1380) having 7 % by weight of butadiene rubber content, 1.5 µm of average rubber particle size, produced by Cheil Industries Inc. of Korea was used.

### (a₂) Copolymer Resin

75 parts of styrene, 25 parts of acrylonitrile, and 120 parts of deionized water were mixed. To the mixture, 0.2 parts of azobisisobutylonitrile (AIBN), 0.4 parts of tricalcium phosphate and 0.2 parts of mercaptan-containing chain transfer agent were added. The resultant solution was heated to 80°C for 90 minutes and kept for 180 minutes. The resultant was washed, dehydrated and dried to obtain styrene-acrylonitrile copolymer resin (SAN) in powder form.

### (B) Ring-shaped Alkyl Phosphonate Ester Compound

Antiblaze 1045 of Rhodia Co. [a mixture of 8 % by weight of methyl-bis(5-ethyl-2-methyl-1,3,2-dioxaphosphorinan-5yl) methyl methyl phosphonate ester P-oxide and 85 % by weight of methyl-bis (5-ethyl-2-methyl-1,3,2- dioxaphosphorinan-5yl) phosphonate ester P, P'-dioxide] was used.

### (B') Aromatic Phosphate Ester Compound

Triphenylphosphate (TPP) with a melting point of 48 °C was used.

### (C) Fluorinated Polyolefin Resin

Teflon (registered trademark) 7AJ produced by Dupont company was used as an anti-dripping agent.

### Examples 1~3

The components as shown in Table 1 were mixed and the mixture was extruded at 180~250 °C with a conventional twin screw extruder in pellets. The resin pellets were dried at 80 °C for 3 hours, and molded into test specimens using a 6 oz injection molding machine at 180~280°C and mold temperature of 40~80 °C. The flame retardancy of the test specimens was measured in accordance with UL94VB with a thickness of 1/8" and 1/12" respectively.

### Comparative Examples 1~3

Comparative Example 1 was conducted in the same manner as in Example 1 except that the ring-shaped alkyl phosphonate ester compound was not used. Comparative Examples 2-3 were conducted in the same manner as in Examples 2-3 respectively except that the aromatic phosphate ester compound was used as a flame retardant instead of the ring-shaped alkyl phosphonate ester compound. The test results are presented in Table 1.

**Table 1**

| | | Examples | | | Comp. Examples | | |
|---|---|---|---|---|---|---|---|
| | | 1 | 2 | 3 | 1 | 2 | 3 |
| (A) Rubber Modified | (a₁₁) | 35 | 35 | - | 35 | 35 | - |
| Polystyrene Resin | (a₁₂) | - | - | 100 | - | - | 100 |
| | (a₂) | 65 | 65 | - | 65 | 65 | - |
| (B) Ring-shaped Alkyl | | 20 | 30 | 30 | - | - | - |
| Phosphonate Ester Compound | | | | | | | |
| (B') TPP | | - | - | - | - | 30 | 30 |
| (C) Teflon | | - | - | 0.2 | - | - | 0.2 |
| UL94 flame retardancy (1/12") | | V-1 | V-0 | V-0 | Fail | Fail | Fail |
| UL94 flame retardancy (1/8") | | V-0 | V-0 | V-0 | Fail | V-2 | Fail |

As shown above, the resin compositions employing the ring-shaped alkyl phosphonate ester compound as a flame retardant show good UL94-flame retardancy. However, the resin compositions of Comparative Example 1 which does not use any flame retardant and Comparative Examples 2-3 which employ aromatic phosphate ester compound instead of ring-shaped alkyl phosphonate ester compound show poor flame retardancy.

The present invention can be easily carried out by an ordinary skilled person in the art. Many modifications and changes may be deemed to be with the scope of the present invention as defined in the following claims.

## Claims

1. A thermoplastic resin composition comprising:
(A) 100 parts by weight of a rubber modified polystyrene resin containing (a₁) 20 to 100 % by weight of graft copolymer prepared by graft-polymerizing 5 to 65 % by weight of a rubber polymer, 30 to 95 % by weight of an aromatic vinyl monomer, 0 to 20 % by weight of a monomer copolymerizable with said aromatic vinyl monomer and 0 to 15 % by weight of a monomer selected from the group consisting of acrylic acid, methacrylic acid, maleic anhydride and N-substituted maleimide. ; and (a₂) 0 to 80 % by weight of copolymer prepared by polymerizing 60 to 90 % by weight of an aromatic vinyl monomer, 10 to 40 % by weight of a monomer copolymerizable with said aromatic vinyl monomer and 0 to 30 % by weight of a monomer selected from the group consisting of acrylic acid, methacrylic acid, maleic anhydride and N-substituted maleimide. ; and
(B) 20 to 40 parts by weight of a ring-shaped alkyl phosphonate ester compound; wherein the rubber modified polystyrene resin does not comprise a polyphenylene ether resin.

2. The thermoplastic resin composition as defined in claim 1, wherein said rubber polymer is selected from the group consisting of diene rubbers, saturated rubbers in which hydrogen is added to said diene-containing rubber, isoprene rubbers, acryl rubbers; and a terpolymer of ethylene-propylene-diene (EPDM).

3. The thermoplastic resin composition as defined in claim 1, wherein said aromatic vinyl monomer is selected from the group consisting of styrene, α-methyl styrene and p-methyl styrene.

4. The thermoplastic resin composition as defined in claim 1, wherein said monomer copolymerizable with said aromatic vinyl monomer is selected from cyanide vinyl-containing compounds and unsaturated nitrile-containing compounds.

5. The thermoplastíc resin composition as defined in claim 1, wherein said rubber modified polystyrene resin (A) is selected from the group consisting of acrylonitrile-butadiene-styrene (ABS) copolymer resin, acrylonitrile-acryl rubber-styrene (AAS) copolymer resin, acrylonitrile-ethylenepropylene rubber-styrene (AES) and high impact polystyrene resin (HIPS).

6. The thermoplastic resin composition as defined in claim 1, wherein said ring-shaped alkyl phosphonate ester compound (B) is represented by following formula (I): 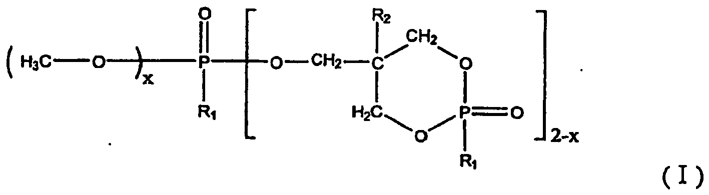 wherein R₁ and R₂ are independently of each other C₁-C₄ alkyl and x is 0 or 1.

7. The thermoplastic resin composition as defined in claim 1, further comprising 0~30 parts by weight of an additive selected from the group consisting of an anti-dripping agent, a heat stabilizer, an oxidation inhibitor, a compatibilizer, a light stabilizer, a pigment and/or a dye and an inorganic filler.

## Patentansprüche

1. Thermoplastische Harzzusammensetzung, umfassend:
(A) 100 Gewichtsteile eines kautschukmodifizierten Polystyrolharzes, enthaltend (a₁) 20 bis 100 Gewichts-% Pfropfcopolymer, das durch Pfropfpolymerisieren von 5 bis 65 Gewichts.-% eines Kautschukpolymers, 30 bis 95 Gewichts-% eines aromatischen Vinylmonomers, 0 bis 20 Gewichts-% eines mit dem aromatischen Vinylmonomer copolymerisierbaren Monomers und 0 bis 15 Gewichts-% eines Monomers, ausgewählt aus der Gruppe, bestehend aus Acrylsäure, Methacrylsäure, Maleinsäureanhydrid und N-substituiertem Maleimid, hergestellt ist; und (a₂) 0 bis 80 Gewichts-% eines Copolymers, das durch Polymerisieren von 60 bis 90 Gewichts-% eines aromatischen Vinylmonomers, 10 bis 40 Gewichts-% eines mit dem aromatischen Vinylmonomer copolymerisierbaren Monomers und 0 bis 30 Gewichts-% eines Monomers, ausgewählt aus der Gruppe, bestehend aus Acrylsäure, Methacrylsäure, Maleinsäureanhydrid und N-substituiertem Maleimid, hergestellt ist; und
(B) 20 bis 40 Gewichtsteile einer ringförmigen Alkylphosphonatesterverbindung; wobei das kautschukmodifizierte Polystyrolharz kein Polyphenylenetherharz umfasst.

2. Thermoplastische Harzzusammensetzung nach Anspruch 1, wobei das Kautschukpolymer ausgewählt ist aus der Gruppe, bestehend aus Dienkautschuks, gesättigten Kautschuks, bei welchen Wasserstoff an den dienhaltigen Kautschuk addiert ist, Isoprenkautschuks, Acrylkautschuks und einem Terpolymer von Ethylen-Propylen-Dien (EPDM).

3. Thermoplastische Harzzusammensetzung nach Anspruch 1, wobei das aromatische Vinylmonomer ausgewählt ist aus der Gruppe, bestehend aus Styrol, α-Methylstyrol und p-Methylstyrol.

4. Thermoplastische Harzzusammensetzung nach Anspruch 1, wobei das mit dem aromatischen Vinylmonomer copolymerisierbare Monomer ausgewählt ist aus cyanidvinylhaltigen Verbindungen und ungesättigten nitrilhaltigen Verbindungen.

5. Thermoplastische Harzzusammensetzung nach Anspruch 1, wobei das kautschukmodifizierte Polystyrolharz (A) ausgewählt ist aus der gruppe, bestehend aus Acrylnitril-Butadien-Styrol(ABS)-Copolymerharz, Acrylnitril-Acrylkautschuk-Styrol(AAS)-Copolymerharz, Acrylnitril-Ethylenpropylenkautschuk-Styrol (AES) und hochschlagzähem Polystyrolharz (high impact polystyrene resin; HIPS).

6. Thremoplastische Harzzusammensetzung nach Anspruch 1, wobei die ringförmige Alkylphosphonatesterverbindung (B) durch die folgende Formel (I) dargestellt ist 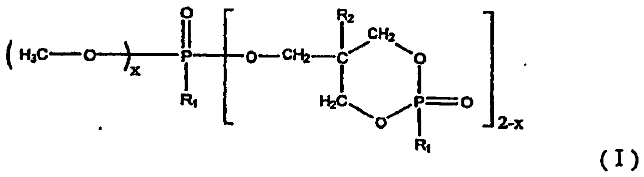 wobei R₁ und R₂ unabhängig voneinander C₁-C₄-Alkyl sind und x 0 oder 1 ist.

7. Thermoplastische Harzzusammensetzung nach Anspruch 1, des Weiteren umfassend 0~30 Gewichtsteile eines Zusatzes, ausgewählt aus der Gruppe, bestehend aus einem Tropfhemmer, einem Wärmestabilisator, einem Oxidationshemmer, einem Verträglichmacher, einem Lichtstabilisator, einem Pigment und/oder einem Farbstoff und einem anorganischen Füllstoff.

## Revendications

1. Composition de résine thermoplastique, comprenant :
(A) 100 parties en poids d'une résine de polystyrène modifiée par un caoutchouc, contenant (a₁) 20 à 100 % en poids d'un copolymère greffé préparé par polymérisation par greffage de 5 à 65 % en poids d'un polymère caoutchouteux, de 30 à 95 % en poids d'un monomère vinylaromatique, de 0 à 20 % en poids d'un monomère copolymérisable avec ledit monomère vinylaromatique et de 0 à 15 % en poids d'un monomère choisi dans le groupe consistant en l'acide acrylique, l'acide méthacrylique, l'anhydride maléique et un maléimide N-substitué, (a₂) 0 à 80 % en poids d'un copolymère préparé par polymérisation de 60 à 90 % en poids d'un monomère vinylaromatique, de 10 à 40 % en poids d'un monomère copolymérisable avec lesdits monomères vinylaromatiques et de 0 à 30 % en poids d'un monomère choisi dans le groupe consistant en l'acide acrylique, l'acide méthacrylique, l'anhydride maléique et un maléimide N-substitué, et
(B) 20 à 40 parties en poids d'un composé ester alkylphosphonate cyclique, la résine de polystyrène modifiée par un caoutchouc ne comprenant pas de résine de poly(phénylène éther).

2. Composition de résine thermoplastique selon la revendication 1, dans laquelle ledit polymère caoutchouteux est choisi dans le groupe consistant en les caoutchoucs diènes, les caoutchoucs saturés dans lesquels de l'hydrogène est ajouté audit caoutchouc contenant des groupes diènes, les caoutchoucs isoprènes, les caoutchoucs acryliques ; et un terpolymère éthylènepropylène-diène (EPDM).

3. Composition de résine thermoplastique selon la revendication 1, dans laquelle ledit monomère vinylaromatique est choisi dans le groupe consistant en le styrène, l'α-méthylstyrène et le p-méthylstyrène.

4. Composition de résine thermoplastique selon la revendication 1, dans laquelle ledit monomère copolymérisable avec ledit monomère vinylaromatique est choisi parmi les composés contenant du cyanure de vinyle et les composés insaturés contenant un nitrile.

5. Composition de résine thermoplastique selon la revendication 1, dans laquelle ladite résine de polyester (A) modifiée par un caoutchouc est choisie dans le groupe consistant en une résine d'un copolymère acrylonitrile-butadiène-styrène (ABS), une résine d'un copolymère acrylonitrile-caoutchouc acrylique-styrène (AAS), un caoutchouc acrylonitrile-éthylènepropylène-styrène (AES), et une résine de polystyrène à grande résistance au choc (HIPS).

6. Composition de résine thermoplastique selon la revendication 1, dans laquelle ledit composé ester alkylphosphonate cyclique (B) est représenté par la formule (I) ci-après : 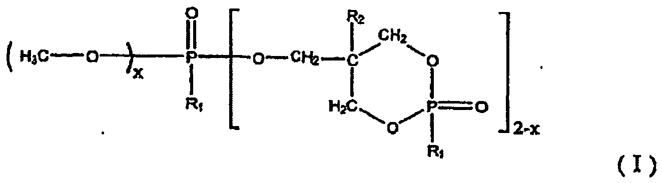 dans laquelle R₁ et R₂ sont choisis indépendamment de l'autre parmi les radicaux alkyle en C₁-C₄, et x vaut 0 ou 1.

7. Composition de résine thermoplastique selon la revendication 1, qui comprend en outre 0 à 30 parties en poids d'un additif choisi dans le groupe consistant en un agent anti-goutte, un thermostabilisant, un inhibiteur d'oxydation, un agent de compatibilisation, un photostabilisant, un pigment et/ou un colorant, et une charge inorganique.
